# EUROPÄISCHE PATENTSCHRIFT

(11) **EP 0 960 483 B1**
(45) Veröffentlichungstag und Bekanntmachung des Hinweises auf die Patenterteilung: **08.05.2002**
(21) Anmeldenummer: 98907862.1
(22) Anmeldetag: 26.01.1998
(51) Int. Cl.: H04B 1/38

(54) **FUNKGERÄT FÜR MOBILFUNK MIT INFORMATIONEN ÜBER DEN BETRIEB DER MF-VERSTÄRKERSCHALTUNG**
RADIO TRANSMITTING APPARATUS FOR MOBILE RADIOTELEPHONE SERVICE WITH INFORMATION CONCERNING THE OPERATING OF THE HF-AMPLIFICATION CIRCUIT
APPAREIL RADIO POUR RADIOTELEPHONIE MOBILE AVEC INFORMATIONS SUR LE FONCTIONNEMENT DU CIRCUIT AMPLIFICATEUR HF

(30) Priorität: 13.02.1997 DE 19705447
(43) Veröffentlichungstag der Anmeldung: 01.12.1999
(73) Patentinhaber: ROBERT BOSCH GMBH, 70442 Stuttgart (DE)
(72) Erfinder: KÄSSER, Jürgen, D-31199 Diekholzen (DE)
(86) Internationale Anmeldenummer: DE9800224
(87) Internationale Veröffentlichungsnummer: WO9836503

(56) Entgegenhaltungen:
- EP-A- 0 602 608
- US-A- 5 303 395
- MILLS D: "ACCESSORY DETECTION BY OSCILLATION" MOTOROLA TECHNICAL DEVELOPMENTS, Bd. 28, August 1996, Seiten 86-88, XP000638429

## Beschreibung

### Stand der Technik

Die Erfindung geht von einem Funkgerät nach der Gattung des Hauptanspruchs aus.

Aus der Druckschrift "European digital cellular telecommunications system (Phase 2); Radio transmission and reception (GSM 05.05)" des European Telecommunications Standards Institute (ETSI) vom Mai 1994 sind Spezifikationen für die Übertragung und den Empfang beim Mobilfunk bekannt. Dabei sind mehrere Leistungsstufen vorgesehen, so beispielsweise eine Leistungsstufe 2 mit einer maximalen Ausgangsleistung von 8 W und eine Leistungsstufe 4 mit einer maximalen Ausgangsleistung von 2 W. Die Leistungsanforderungen an die Mobilfunkgeräte beziehen sich dabei auf den Antennenausgang des entsprechenden Mobilfunkgerätes.

Aus der US 5 303 395 ist bereits ein System zur Steuerung der Leistungsstufe von HF-Signalen bekannt, die von einem tragbaren Funkgerät abgegeben werden. Das tragbare Funkgerät umfaßt eine erste Spannungsversorgung, eine erste Verstärkerstufe und einen Mikrocomputer, der mit der ersten Verstärkerstufe verbunden ist, um eine aus einer Menge von Leistungsstufen auszuwählen. Ein Indikator signalisiert, wenn das Funkgerät mit einer Fahrzeugspannungsversorgung verbunden ist. In Antwort darauf erzeugt der Mikrocomputer ein Steuersignal, das für die gewünschte Leistungsstufe repräsentativ ist. Eine zweite Verstärkerstufe wird mit der ersten Verstärkerstufe verbunden und empfängt HF-Signale mit der ersten Leistungsstufe. Ein Verstärkungssteuerschaltkreis ist mit der zweiten Verstärkerstufe verbunden und empfängt das Steuersignal. Er antwortet durch Setzen der Verstärkung der zweiten Verstärkerstufe auf einen von mindestens zwei konstanten Verstärkungswerten, so daß die ausgegebenen HF-Signale mit der gewünschten Leistungsstufe zur Verfügung gestellt werden.

Aus der EP 0 602 608 A1 ist ein Mobilfunkgerät bekannt, das aus einem portablen Gerät und einem stationären Teil besteht und zur Steuerung zwischen beiden Geräten mit jeweils einer Steuerungseinheit versehen ist. Über die Steuerungseinheit erfolgen eine Sendeleistungsregelung im Booster und eine Ein- und Ausschaltung des Boosters aus dem portablen Gerät. In Gegenrichtung erhält das portable Gerät Informationen über die Anwesenheit bzw. Nichtanwesenheit eines Boosters. Die im Booster erforderlichen Steuersignale beschränken sich auf zwei Signale, nämlich auf das zur Verstärkungsumschaltung und das zur Ein-/Ausschaltung aller Stromverbraucher bis auf die Schaltung, die die Steuerungsfunktion zwischen Booster und Handheld im Stand/By-Betrieb sicherstellen muß.

### Vorteile der Erfindung

Das erfindungsgemäße Funkgerät mit den Merkmalen des Hauptanspruchs hat demgegenüber den Vorteil, daß das Funkgerät in verschiedenen Leistungsstufen betreibbar und somit flexibel einsetzbar ist. Ein weiterer Vorteil besteht darin, daß ein preiswertes Funkgerät einer niedrigeren Leistungsstufe mittels einer anschließbaren HF-Verstärkerschaltung auf einfache Weise für den Betrieb in einer höheren Leistungsstufe aufgerüstet werden kann. Für verschiedene Leistungsstufen kann daher unter Verwendung der entsprechenden Zusatzausrüstung ein einziges Funkgerät verwendet werden, wodurch insgesamt Kosten eingespart werden, da lediglich die entsprechende HF-Verstärkerschaltung als Zubehör hergestellt bzw. erworben werden muß, nicht jedoch ein vollständiges neues Funkgerät.

Vorteilhaft ist auch, daß die Reichweite eines Funkgerätes einer ersten vorgegebenen Leistungsstufe mit einfachen Mitteln durch Anschluß einer HF-Verstärkerschaltung erhöht werden kann.

Durch die in den Unteransprüchen aufgeführten Maßnahmen sind vorteilhafte Weiterbildungen und Verbesserungen des im Hauptanspruch angegebenen Funkgerätes möglich.

Besonders vorteilhaft ist die Verwendung einer Auswerteschaltung und die Detektion einer an das Funkgerät angeschlossenen HF-Verstärkerschaltung mittels der Auswerteschaltung. Somit ist für das Funkgerät eine einfache Möglichkeit gegeben, seine aktuelle Leistungsstufe zu ermitteln.

Vorteilhaft ist weiterhin, daß das Funkgerät einen Eingang aufweist, an den ein Ausgang der HF-Verstärkerschaltung anschließbar ist, daß die Auswerteschaltung mit dem Eingang verbunden ist und daß die Auswerteschaltung die Sendeeinheit des Funkgerätes in Abhängigkeit von Signalen bzw. des Spannungsabfalls am Eingang ansteuert. Auf diese Weise kann eine an das Funkgerät angeschlossene HF-Verstärkerschaltung besonders einfach und sicher detektiert und das Funkgerät auf einfache Weise entsprechend seiner aktuellen Leistungsstufe im Funknetz eingebucht werden.

Besonders vorteilhaft ist es, wenn die Auswerteschaltung an den Antennenausgang angeschlossen ist und die Auswerteschaltung die Sendeeinheit des Funkgerätes in Abhängigkeit von Signalen bzw. des Spannungsabfalls am Antennenausgang ansteuert. Somit ist eine besonders einfache und sichere Möglichkeit gegeben, den Anschluß einer entsprechenden HF-Verstärkerschaltung an das Funkgerät zu detektieren und die Einbuchung des Funkgerätes entsprechend seiner aktuellen Leistungsstufe im Funknetz zu veranlassen, wobei zur Detektion des Anschlusses der HF-Verstärkerschaltung an das Funkgerät keine zusätzliche Verbindungsleitung zwischen dem Funkgerät und der HF-Verstärkerschaltung erforderlich ist.

### Zeichnung

Ausführungsbeispiele der Erfindung sind in der Zeichnung dargestellt und in der nachfolgenden Beschreibung näher erläutert. Es zeigen Figur 1 ein Blockschaltbild eines erfindungsgemäßen Funkgerätes mit angeschlossener HF-Verstärkerschaltung in einer ersten Ausführungsform, Figur 2 ein Blockschaltbild eines erfindungsgemäßen Funkgerätes mit angeschlossener HF-Verstärkerschaltung in einer zweiten Ausführungsform und Figur 3 einen Ablaufplan für eine Auswerteschaltung eines erfindungsgemäßen Funkgerätes.

### Beschreibung des Ausführungsbeispiels

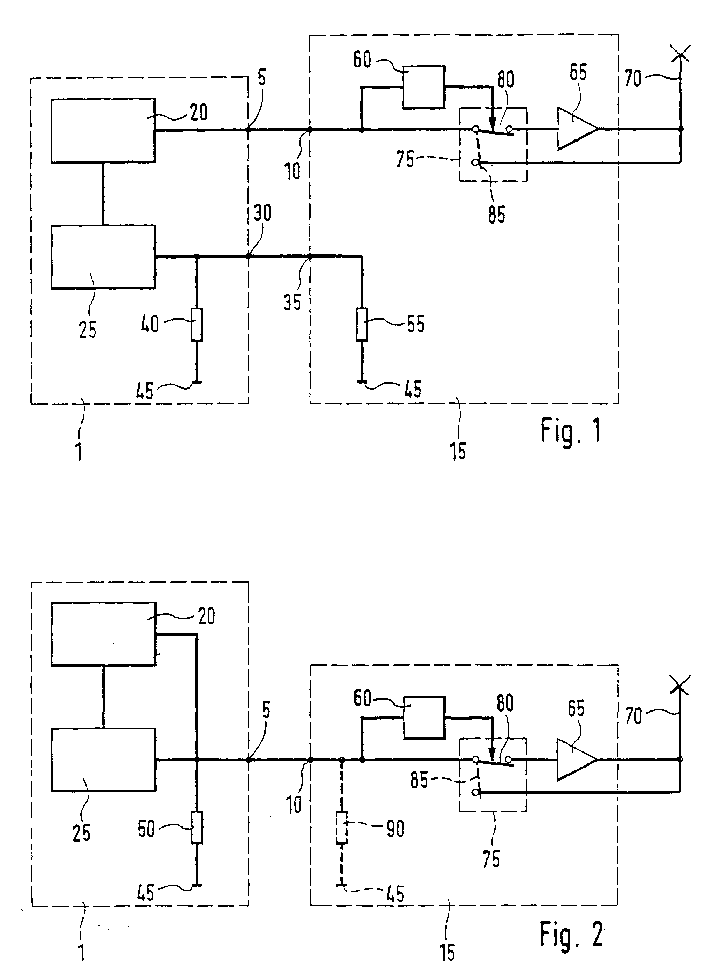

In Figur 1 kennzeichnet 1 ein als Mobiltelefon ausgebildetes Funkgerät mit einer Sendeeinheit 20, die auch eine Empfangseinheit umfaßt und daher im folgenden als Sende-/Empfangseinheit 20 bezeichnet ist und einer Auswerteschaltung 25, die mit der Sende-/Empfangseinheit 20 verbunden ist. Die Sende-/Empfangseinheit 20 ist mit einem Antennenausgang 5 des Mobiltelefons 1 verbunden und die Auswerteschaltung 25 ist mit einem Eingang 30 des Mobiltelefons 1 verbunden. Das Mobiltelefon 1 weist weiterhin einen ersten Widerstand 40 auf, über den der Eingang 30 mit einem Bezugspotential 45 verbunden ist. An das Mobiltelefon 1 ist eine HF-Verstärkerschaltung 15 angeschlossen, die einen mit dem Antennenausgang 5 verbundenen Eingang 10 aufweist. Ein mit dem Eingang 30 verbundener Ausgang 35 der HF-Verstärkerschaltung 15 ist über einen zweiten Widerstand 55 der HF-Verstärkerschaltung 15 ebenfalls mit dem Bezugspotential 45 verbunden. Der Eingang 10 ist über einen Schalter 75 einerseits in einer ersten Schalterstellung 80 mit dem Eingang eines Verstärker 65 verbindbar, dessen Ausgang an eine Sende-/Empfangsantenne 70 angeschlossen ist, und andererseits in einer zweiten Schalterstellung 85 direkt mit der Sende-/Empfangsantenne 70 verbindbar. An den Eingang 10 ist außerdem eine Detektorschaltung 60 angeschlossen, die den Schalter 75 ansteuert.

Das Mobiltelefon 1 wird beispielsweise gemäß der in der Druckschrift "European digital cellular telecommunications system (Phase 2); Radio transmission and reception (GSM 05.05)" des European Telecommunication Standards Institute (ETSI) vom Mai 1994 in einer Leistungsstufe 4 mit einer maximalen Ausgangsleistung von 2 W betrieben. Mittels der HF-Verstärkerschaltung 15 ist jedoch in Abhängigkeit der Verstärkung des Verstärkers 65 auch ein Betrieb des Mobiltelefons 1 in einer höheren Leistungsstufe, beispielsweise der Leistungsstufe 3 mit einer maximalen Ausgangsleistung von 5 W oder in der Leistungsstufe 2 mit einer maximalen Ausgangsleistung von 8 W möglich. Dazu muß jedoch das Mobiltelefon 1 von vornherein die für die höheren Leistungsstufen vorgesehenen Spezifikationen des oben genannten GSM-Standards 05.05 erfüllen. So weist das Mobiltelefon 1 beispielsweise die für die Leistungsstufe 2 vorgeschriebene höhere Intermodulationsfestigkeit von -43 dBm anstelle von -49 dBm für die Leistungsstufe 4 und eine höhere Empfindlichkeit von -104 dBm anstelle von -102 dBm im Empfangsteil der Sende-/Empfangseinheit 20 auf.

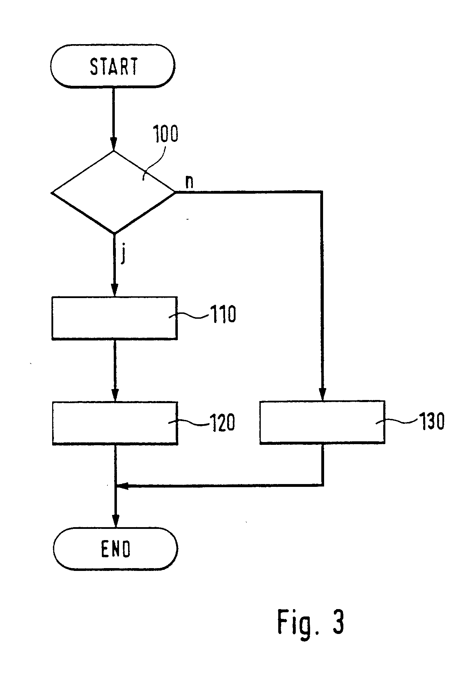

In Figur 3 ist ein Ablaufplan für die Funktionsweise der Auswerteschaltung 25 angegeben. Vor dem Aufbau einer Gesprächsverbindung muß das Mobiltelefon 1 einer Basisstation im Mobilfunknetz seine Leistungsstufe mitteilen, damit entsprechend der von der Leistungsstufe abhängigen Reichweite des Mobiltelefons 1 die für eine synchrone Datenübertragung erforderlichen Verzögerungszeiten eingestellt werden können. So erfolgt seitens der Auswerteschaltung 25 vor einem Verbindungsaufbau bei Programmpunkt 100 eine Abfrage des Spannungsabfalls am Eingang 30. Ist der Spannungsabfall am Eingang nicht maximal, so wird zu Programmpunkt 110 verzweigt, andernfalls wird zu Programmpunkt 130 verzweigt. Bei Programmpunkt 110 wird aus dem gemessenen Spannungsabfall die Leistungsstufe des um die HF-Verstärkerschaltung 15 ergänzten Mobiltelefons 1 ermittelt. Dabei ist der zweite Widerstand 55 in Abhängigkeit der Verstärkung des Verstärkers 65 eingestellt, so daß die Auswerteschaltung 25 aus der Leistungsstufe des Mobiltelefons 1 und dem Spannungsabfall am Eingang 30 die Leistungsstufe des um die HF-Verstärkerschaltung 15 ergänzten Mobiltelefons 1 ermitteln kann. Bei Programmpunkt 120 wird die Sende-/Empfangseinheit 20 durch ein entsprechendes Steuersignal der Auswerteschaltung 25 dazu aktiviert, Signale an die Sende-/Empfangsantenne 70 zur Absendung an eine Basisstation des Funknetzes abzugeben, die Informationen über einen Betrieb bei der ermittelten Leistungsstufe enthalten. Die Auswerteschaltung 25 steuert also die Sende-/Empfangseinheit 20 des Mobiltelefons 1 in Abhängigkeit des Spannungsabfalls am Antennenausgang 5 an. Anschließend wird das Programm verlassen und es kann eine Gesprächsverbindung aufgebaut werden. Dabei wird ein vom Antennenausgang 5 an die HF-Verstärkerschaltung 15 übertragenes Sendesignal von der Detektorschaltung 60 detektiert, die dann die erste Schalterstellung 80 des Schalters 75 zum Anschluß des Verstärkers 65 und somit zum Senden in der höheren Leistungsstufe einstellt. Für den Empfang, das heißt bei Nichtdetektion eines Sendesignals seitens der Detektorschaltung 60 schaltet diese den Schalter 75 auf die zweite Schalterstellung 85 um, so daß die Sende-/Empfangsantenne 70 zum Empfang von Signalen aus dem Funknetz direkt mit dem Antennenausgang 5 des Mobiltelefons 1 verbunden ist. Bei Programmpunkt 130 wird die Sende-/Empfangseinheit 20 des Mobiltelefons 1 durch ein entsprechendes Steuersignal der Auswerteschaltung 25 dazu aktiviert, Signale zur Absendung mittels der Sende-/Empfangsantenne 70 an eine Basisstation des Funknetzes abzugeben, die Informationen über einen Betrieb bei der Leistungsstufe 4 des Mobiltelefons 1 enthalten. Anschließend wird das Programm verlassen und es kann eine Gesprächsverbindung aufgebaut werden.

In einem weiteren Ausführungsbeispiel gemäß Figur 2 sind gleiche Teile mit gleichen Bezugszeichen gekennzeichnet. Im Unterschied zum ansonsten gleich ausgeführten Ausführungsbeispiel gemäß Figur 1 ist auch beim Ausführungsbeispiel gemäß Figur 2 die Auswerteschaltung 25 an den Antennenausgang 5 angeschlossen und der Antennenanschluß 5 über einen dritten Widerstand 50 mit dem Bezugspotential 45 verbunden. In der HF-Verstärkerschaltung 15 kann, wie in Figur 2 gestrichelt angedeutet ist, der Eingang 10 über einen vierten Widerstand 90 mit dem Bezugspotential 45 verbunden sein. Ein Eingang des Mobiltelefons 1 ist dabei nicht vorgesehen, ebensowenig wie ein Ausgang der HF-Verstärkerschaltung 15. Der Spannungsabfall zur Detektion einer angeschlossenen HF-Verstärkerschaltung wird seitens der Auswerteschaltung 25 somit direkt am Antennenausgang 5 ermittelt. Der gestrichelt dargestellte vierte Widerstand 90 der HF-Verstärkerschaltung 15 ist nicht unbedingt erforderlich, da auch der Eingangswiderstand der HF-Verstärkerschaltung 15 als Maß für die Verstärkung des Verstärkers 65 und damit für die zusammen mit dem Mobiltelefon 1 erzielte Leistungsstufe verwendet werden kann.

Der in Figur 1 dargestellte erste Widerstand 40 bzw. der in Figur 2 dargestellte dritte Widerstand 50 kann auch innerhalb der Auswerteschaltung 25 angeordnet sein oder durch den entsprechenden Innenwiderstand der Auswerteschaltung 25 gebildet sein und dient bei den beschriebenen Ausführungsbeispielen der Veranschaulichung des Prinzips der Erkennung einer angeschlossenen HF-Verstärkerschaltung 15.

Durch den Verstärker 65 der HF-Verstärkerschaltung 15 wird das an der Sende-/Empfangsantenne 70 abzustrahlende Signal auf die entsprechende Leistung gemäß der höheren zweiten Leistungsstufe verstärkt, während das zu empfangende Signal ohne Verschlechterung von der Sende-/Empfangsantenne 70 zur Sende-/Empfangseinheit 20 durchgereicht wird. Gemäß dem Ausführungsbeispiel nach Figur 2 kann es erforderlich sein, Vorkehrungen zu treffen, um ein Sende- oder Empfangssignal von durch die Detektion der angeschlossenen HF-Verstärkerschaltung 15 bedingten Störungen freizuhalten oder solche Störungen zu eliminieren.

Die Spannungsquelle zur Erzeugung des für die Detektion einer angeschlossenen HF-Verstärkerschaltung 15 erforderlichen Spannungsabfalls am Eingang 30 gemäß Figur 1 bzw. am Antennenausgang 5 gemäß Figur 2 kann beispielsweise in der Auswerteschaltung 25 untergebracht sein oder in anderer dem Fachmann bekannter Weise mit dem Eingang 30 bzw. dem Antennenausgang 5 verbunden sein und ist in Figur 1 bzw. Figur 2 nicht dargestellt.

Das erfindungsgemäße Funkgerät kann auch beispielsweise in ein Autoradio integriert und entsprechend der beschriebenen Ausführungsbeispiele zum Anschluß einer HF-Verstärkerschaltung vorbereitet sein.

## Patentansprüche

1. Funkgerät (1), insbesondere für Mobilfunk, mit einem Antennenausgang (5), wobei an den Antennenausgang (5) ein Eingang (10) einer HF-Verstärkerschaltung (15) zum Betrieb des Funkgerätes (1) mit einer höheren Leistung anschließbar ist, **dadurch gekennzeichnet, daß** in Abhängigkeit von der an das Funkgerät (1) angeschlossenen HF-Verstärkerschaltung (15) das Funkgerät (1) Signale zur Absendung an eine Basisstation abgibt, die Informationen über den Betrieb mit der HF-Verstärkerschaltung (15) enthalten.

2. Funkgerät (1) nach Anspruch 1, **dadurch gekennzeichnet, daß** das Funkgerät (1) in Abhängigkeit des Anschlusses der HF-Verstärkerschaltung (15) bei verschiedenen Leistungsstufen betreibbar ist.

3. Funkgerät (1) nach Anspruch 1 oder 2, **dadurch gekennzeichnet, daß** eine Auswerteschaltung (25) im Funkgerät (1) vorgesehen ist und daß die Auswerteschaltung (25) eine an das Funkgerät (1) angeschlossene HF-Verstärkerschaltung (15) detektiert.

4. Funkgerät (1) nach Anspruch 3, **dadurch gekennzeichnet, daß** das Funkgerät (1) einen Eingang (30) aufweist, an den ein Ausgang (35) der HF-Verstärkerschaltung (15) anschließbar ist, daß die Auswerteschaltung (25) mit dem Eingang (30) verbunden ist und daß das Funkgerät (1) in Abhängigkeit von den am Eingang (30) auftretenden Signalen die Information über den Betrieb mit der HF-Verstärkerschaltung (15) bereitstellt.

5. Funkgerät (1) nach Anspruch 4, **dadurch gekennzeichnet, daß** das Funkgerät (1) in Abhängigkeit eines detektierten Spannungsabfalls am Eingang (30) die Information über den Betrieb mit der HF-Verstärkerschaltung (15) bereitstellt.

6. Funkgerät (1) nach Anspruch 4 oder 5, **dadurch gekennzeichnet, daß** der Eingang (30) des Funkgerätes (1) über einen Widerstand (40) mit einem Bezugspotential (45) verbunden ist.

7. Funkgerät (1) nach Anspruch 2, **dadurch gekennzeichnet, daß** die Auswerteschaltung (25) an den Antennenausgang (5) angekoppelt ist und daß das Funkgerät (1) in Abhängigkeit von den am Antennenausgang (5) auftretenden Signalen die Information über den Betrieb mit der HF-Verstärkerschaltung (15) bereitstellt.

8. Funkgerät (1) nach Anspruch 7, **dadurch gekennzeichnet, daß** das Funkgerät (1) in Abhängigkeit des Spannungsabfalls am Antennenausgang (5) die Information über den Betrieb mit der HF-Verstärkerschaltung (15) bereitstellt.

9. Funkgerät (1) nach einem der vorherigen Ansprüche, **dadurch gekennzeichnet, daß** der Antennenausgang (5) des Funkgerätes (1) über einen Widerstand (50) mit dem Bezugspotential (45) verbunden ist.

## Claims

1. Radio set (1), in particular for mobile radio, having an antenna output (5), where an input (10) of an RF amplifier circuit (15) can be connected to the antenna output (5) in order to operate the radio set (1) at a higher power, **characterized in that**, on the basis of the RF amplifier circuit (15) connected to the radio set (1), the radio set (1) outputs signals to be sent to a base station which contain information about the operation with the RF amplifier circuit (15).

2. Radio set (1) according to Claim 1, **characterized in that** the radio set (1) can be operated at various power levels on the basis of the connection of the RF amplifier circuit (15).

3. Radio set (1) according to Claim 1 or 2, **characterized in that** an evaluation circuit (25) is provided in the radio set (1), and **in that** the evaluation circuit (25) detects an RF amplifier circuit (15) connected to the radio set (1).

4. Radio set (1) according to Claim 3, **characterized in that** the radio set (1) has an input (30) to which an output (35) of the RF amplifier circuit (15) can be connected, **in that** the evaluation circuit (25) is connected to the input (30), and **in that** the radio set (1) provides the information about the operation with the RF amplifier circuit (15) on the basis of the signals applied to the input (30).

5. Radio set (1) according to Claim 4, **characterized in that** the radio set (1) provides the information about the operation with the RF amplifier circuit (15) on the basis of a detected voltage drop at the input (30).

6. Radio set (1) according to Claim 4 or 5, **characterized in that** the input (30) of the radio set (1) is connected to a reference-earth potential (45) via a resistor (40).

7. Radio set (1) according to Claim 2, **characterized in that** the evaluation circuit (25) is coupled to the antenna output (5), and **in that** the radio set (1) provides the information about the operation with the RF amplifier circuit (15) on the basis of the signals produced at the antenna output (5).

8. Radio set (1) according to Claim 7, **characterized in that** the radio set (1) provides the information about the operation with the RF amplifier circuit (15) on the basis of the voltage drop at the antenna output (5).

9. Radio set (1) according to one of the preceding claims, **characterized in that** the antenna output (5) of the radio set (1) is connected to the reference-earth potential (45) via a resistor (50).

## Revendications

1. Appareil radio (1) notamment téléphone mobile comprenant une sortie d'antenne (5) à laquelle est reliée une entrée (10) d'un amplificateur HF (15) pour faire fonctionner l'appareil radio (1) à une puissance plus élevée,
**caractérisé en ce qu'**
en fonction de l'amplificateur HF (15) relié à l'appareil radio (1), cet appareil radio (1) fournit des signaux à émettre vers une station de base, ces signaux contenant des informations relatives au fonctionnement avec l'amplificateur HF.

2. Appareil radio (1) selon la revendication 1,
**caractérisé en ce qu'**
il fonctionne suivant le branchement de l'amplificateur HF (15) à différents niveaux de puissance.

3. Appareil radio (1) selon l'une quelconque des revendications 1 ou 2,
**caractérisé en ce qu'**
il comporte un circuit de traitement (25) et ce circuit (25) détecte un amplificateur HF (15) relié à l'appareil radio (1).

4. Appareil radio (1) selon la revendication 3,
**caractérisé en ce qu'**
il comporte une entrée (30) à laquelle est reliée une sortie (35) de l'amplificateur HF (15), le circuit de traitement (25) est relié à l'entrée (30) et l'appareil radio (1) fournit en fonction des signaux appliqués à l'entrée (30), l'information concernant le fonctionnement avec le circuit amplificateur HF (15).

5. Appareil radio (1) selon la revendication 4,
**caractérisé en ce qu'**
en fonction d'une chute de tension détectée à l'entrée (30), il fournit l'information concernant le fonctionnement avec un amplificateur HF (15).

6. Appareil radio (1) selon l'une quelconque des revendications 4 ou 5,
**caractérisé en ce que**
son entrée (30) est reliée par une résistance (40) à un potentiel de référence (45).

7. Appareil radio (1) selon la revendication 2,
**caractérisé en ce que**
le circuit de traitement (25) est couplé à la sortie d'antenne (5) et l'appareil radio (1), en fonction des signaux appliqués à la sortie d'antenne (5), fournit l'information concernant le fonctionnement avec l'amplificateur HF (15).

8. Appareil radio (1) selon la revendication 7,
**caractérisé en ce qu'**
en fonction de la chute de tension à la sortie d'antenne (5), il fournit l'information relative au fonctionnement avec l'amplificateur HF (15).

9. Appareil radio (1) selon l'une quelconque des revendications précédentes,
**caractérisé en ce que**
sa sortie d'antenne (5) est reliée par une résistance (50) au potentiel de référence (45).
